(19) Europäisches Patentamt

European Patent Office

Office européen des brevets

(11) **EP 3 510 000 B1**

(12) **FASCICULE DE BREVET EUROPEEN**

(45) Date de publication et mention
de la délivrance du brevet:
**12.05.2021 Bulletin 2021/19**

(21) Numéro de dépôt: **17761902.0**

(22) Date de dépôt: **08.09.2017**

(51) Int Cl.:
*C02F 1/52* *(2006.01)*          *B01D 21/01* *(2006.01)*
*C02F 1/56* *(2006.01)*          *C02F 103/10* *(2006.01)*

(86) Numéro de dépôt international:
**PCT/EP2017/072628**

(87) Numéro de publication internationale:
**WO 2018/046687 (15.03.2018 Gazette 2018/11)**

(54) **PROCEDE DE TRAITEMENT D'EFFLUENTS AQUEUX**

VERFAHREN ZUR ABWASSERBEHANDLUNG

AQUEOUS EFFLUENT TREATMENT METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.09.2016 FR 1658425**

(43) Date de publication de la demande:
**17.07.2019 Bulletin 2019/29**

(73) Titulaire: **S.P.C.M. SA
42160 Andrézieux Bouthéon (FR)**

(72) Inventeurs:
• **FAVERO, Cédrick
42160 Andrezieux-Bouthéon (FR)**
• **TIZZOTI, Morgan
42160 Andrezieux-Bouthéon (FR)**

(74) Mandataire: **Lavoix
62, rue de Bonnel
69448 Lyon Cedex 03 (FR)**

(56) Documents cités:
**GB-A- 2 082 163          US-A- 5 433 865
US-A1- 2011 000 854      US-A1- 2015 151 990
US-A1- 2015 315 056**

EP 3 510 000 B1

**Description**

L'invention concerne le traitement de résidus miniers sous la forme d'effluents aqueux comprenant des particules solides. Le procédé de l'invention permet de séparer tout ou partie de l'eau d'un effluent aqueux comprenant des particules solides. Ce procédé comprend (a) l'addition dans l'effluent d'au moins un polymère naturel modifié anionique, puis (b) l'addition d'au moins un polymère naturel modifié cationique.

L'invention concerne également une composition comprenant un effluent aqueux comprenant des particules solides traitées par deux polymères naturels modifiés de charges opposées. De préférence, elle concerne une composition comprenant un effluent aqueux comprenant des particules solides, au moins un polymère naturel modifié anionique, et au moins un polymère naturel modifié cationique.

De nombreuses méthodes d'extraction minière produisent des résidus sous la forme d'effluents aqueux comprenant des particules solides. Par exemple, la production d'hydrocarbures à partir de sables bitumineux ou pétrolifères conduit à de tels résidus miniers. Ainsi, la gestion des résidus miniers constitue un défi de taille pour l'industrie minière, notamment depuis le début de l'exploitation des sables pétrolifères. Il incombe donc aux exploitants de déterminer la façon d'éliminer ces sous-produits de manière sécuritaire et efficace. Le défi est d'autant plus considérable du fait de l'importance de la taille des exploitations de sables pétrolifères.

De manière générale, l'exploitation minière produit également de tels résidus ou matériaux de rebut, notamment lors de l'extraction de minerais pour la production de charbon, de diamant, de phosphate ou de différents métaux, par exemple aluminium, platine, fer, or, cuivre, argent, etc. De tels résidus peuvent également résulter de la transformation de minerais ou encore de procédés industriels ou de lavage.

Les résidus miniers peuvent prendre différentes formes, notamment de boues. En général, il s'agit de suspensions de particules solides dans de l'eau.

Généralement, les résidus miniers des sables pétrolifères se composent donc d'eau, d'argile, de sable et d'hydrocarbures résiduels provenant du processus d'extraction.

Les pratiques courantes de l'industrie consistaient jusqu'à présent à pomper les résidus dans de vastes bassins de décantation. Par la suite, la matière la plus lourde, principalement du sable, se dépose au fond, tandis que l'eau monte à la surface et peut être recyclée. La couche intermédiaire, connue sous le nom de résidus fins mûrs (MFT ou *mature fine tailings*), est généralement composée à 70 % d'eau et à 30 % de particules d'argile fines. Naturellement, la couche de résidus fins mûrs pourrait prendre des siècles à se solidifier. Le développement continu de l'exploitation minière a nécessité la création d'un nombre croissant de bassins de décantation toujours plus importants.

Ainsi, les boues minérales produites par des procédés de traitement physiques ou chimiques des sables bitumineux sont stockées dans des bassins à ciel ouvert, des étangs, des barrages de rétention ou des remblais sous forme semi-liquide. Ces grands volumes de boue stockée créent par conséquent un véritable danger, en particulier en cas de rupture des digues.

Notamment du fait des impératifs techniques, environnementaux ou réglementaires, il est désormais nécessaire de trouver un moyen d'accélérer ou d'améliorer l'efficacité de la transformation des résidus fins mûrs en un dépôt ferme pouvant ensuite être réhabilité. La remise en état des sols suite à l'exploitation minière est rendue obligatoire par la législation environnementale.

L'accélération du traitement des résidus miniers est également nécessaire, notamment en augmentant la vitesse de sédimentation des résidus afin de recycler l'eau efficacement ainsi que pour réduire le volume de résidus.

De manière générale, la séparation et le recyclage de tout ou partie de l'eau présente au sein des effluents aqueux miniers constituent des buts essentiels lors de l'exploitation minière. Ainsi, les procédés de traitement d'effluents aqueux comprenant des particules solides ont comme but essentiel d'améliorer le rendement de séparation de l'eau, notamment dans le but de recycler l'eau séparée ainsi que de permettre la manipulation aisée du résidu final. L'augmentation de ce rendement net de séparation de l'eau (NWR ou *net water release*) constitue un but important des procédés de traitement des effluents aqueux comprenant des particules solides.

On connaît des méthodes de traitement physique de ces résidus miniers, par exemple la centrifugation, la filtration, l'électrophorèse et l'électrocoagulation.

D'autre part, des procédés chimiques émergent. On connaît par exemple des procédés impliquant l'addition de produits chimiques, tels que le silicate de sodium, des agents de floculation organiques, des agents de coagulation inorganiques, des agents d'oxydation, des agents de réduction ou encore du dioxyde de carbone. On connaît également l'utilisation de polymères synthétiques comme agents de coagulation ou de floculation, pour séparer les solides du liquide Des documents qui divulguent le traitement de résidus miniers sont p.e. US 2011/000854 A1, GB 2 082 163, US 2015/315056, US 5 433 865 A.

Ainsi, même s'il existe des techniques de traitement de résidus miniers, ces techniques ne permettent pas d'apporter une solution totalement efficace aux problèmes rencontrés, notamment d'un point de vue technique, environnemental ou d'ordre public.

Il est donc nécessaire de pouvoir disposer de méthodes qui permettent d'apporter des solutions à tout ou partie des problèmes des méthodes de l'état de la technique.

Il est décrit un procédé de traitement d'un effluent aqueux comprenant des particules solides, comprenant

(a) l'addition dans l'effluent d'au moins un polymère naturel modifié anionique , puis
(b) l'addition d'au moins un polymère naturel modifié cationique.

Le polymère naturel modifié anionique est un polysaccharide naturel modifié anionique et le polymère naturel modifié cationique est un polysaccharide naturel modifié cationique.

L'invention fournit un procédé de traitement d'un effluent aqueux comprenant des particules solides, comprenant

(a) l'addition dans l'effluent d'au moins un polysaccharide naturel modifié anionique choisi parmi les gommes de guar anioniques puis
(b) l'addition d'au moins un polysaccharide naturel modifié cationique choisi parmi les amidons cationiques ou les dextrans cationiques,

dans lequel l'effluent est :

- un effluent d'extraction minière provenant des mines de charbon, des mines de diamant, des mines de phosphate, des mines de métal comme l'aluminium, le platine, le fer, l'or, le cuivre, argent ; ou
- un effluent d'extraction minière de sable bitumineux ou de sable pétrolifère ; ou
- un effluent comprenant de 5 à 70 % en masse, de préférence de 20 à 50 % en masse, plus préférentiellement de 30 à 40 % en masse, de particules solides ; ou
- un effluent comprenant du sable, de l'argile et de l'eau ; ou
- un effluent comprenant du sable, de l'argile, de l'eau et du bitume résiduel ; ou
- un effluent comprenant des résidus frais ; ou
- un effluent comprenant des résidus fins.

Le procédé de traitement selon l'invention comprend donc :

(a) le traitement des particules solides comprises dans l'effluent au moyen d'un polymère naturel modifié anionique ;
(b) le traitement des particules obtenues à l'issue de l'étape (a) au moyen d'un polymère naturel modifié cationique.

Selon l'invention, le polymère naturel modifié anionique est un polysaccharide naturel modifié anionique choisi parmi les gommes de guar anioniques.

De manière avantageuse, le procédé selon l'invention est tel que le polymère naturel modifié cationique est un polysaccharide naturel modifié cationique choisi parmi les amidons cationiques ou les dextrans cationiques.

Selon l'invention, l'effluent est avantageusement un effluent d'extraction minière, provenant des mines de charbon, des mines de diamant, des mines de phosphate, des mines de métal comme l'aluminium, le platine, le fer, l'or, le cuivre, argent, etc..... L'effluent peut également être un effluent d'extraction minière de sable bitumineux ou de sable pétrolifère.

De préférence l'effluent est un effluent d'extraction minière de sable bitumineux ou de sable pétrolifère. Outre les particules solides, l'effluent comprend de l'eau. Il peut comprendre du sable, de l'argile et de l'eau ou bien du sable, de l'argile, de l'eau et du bitume résiduel.

Généralement, l'effluent aqueux selon l'invention comprend de 5 à 70 % en masse, de préférence de 20 à 50 % en masse, plus préférentiellement de 30 à 40 % en masse, de particules solides, notamment des particules minérales notamment choisies parmi argile et sable ou leurs mélanges.

L'effluent traité selon le procédé de l'invention peut comprendre différents résidus. Ces résidus peuvent être des résidus frais ou des résidus fins. De préférence, il s'agit d'un effluent comprenant des résidus fins mûrs (RFM ou MFT pour *mature fine tailings*) ou d'un effluent comprenant des résidus fins frais (RFF ou FFT pour fresh fine tailings), en particulier il s'agit d'un effluent comprenant des résidus fins mûrs (RFM ou MFT pour *mature fine tailings*), et plus particulièrement il s'agit d'un effluent comprenant des résidus fins mûrs (RFM ou MFT pour *mature fine tailings*) comprenant une quantité d'argiles allant de 5 à 70 % en masse.
De manière générale, l'effluent aqueux issu de l'exploitation minière de sables bitumineux et traité selon l'invention, peut également comprendre du bitume résiduel. Le bitume résiduel est alors présent en faible quantité, généralement en une quantité inférieure à 5 % en masse d'effluent aqueux.

Les polymères naturels modifiés anioniques et polymères naturels modifiés cationiques selon l'invention sont des polymères semi-biosourcés. Par polymères semi-biosourcés nous désignons tous les polymères semi-naturels. Les polymères semi-naturels sont obtenus par la modification chimique ou enzymatique de polymères naturels issus de la biomasse. Comme polymères chimiquement modifiés nous pouvons citer par exemple les polysaccharides chimiquement modifiés comme par exemple les gommes de guar anioniques, les amidons cationiques, les dextrans cationiques. Les différentes réactions chimiques permettant d'obtenir ces polysaccharides modifiés sont connues de l'homme de l'art. Ces réactions sont décrites dans le document Ian Cumpstey, "Chemical Modification of Polysaccharides," ISRN Organic Chemistry, vol. 2013.

Selon l'invention, le polymère naturel modifié anionique est employé comme agent de traitement primaire, et le polymère naturel modifié cationique est employé comme agent de traitement secondaire.

De manière préférée pour le procédé selon l'invention, le polymère naturel modifié anionique est ajouté en une quantité en masse allant de 10 à 10 000 ppm par rapport à la quantité de particules solides comprises dans l'effluent aqueux. D'un point de vue pratique, il est ajouté en une quantité allant de 10 à 10 000 g par tonne de particules solides comprises dans l'effluent aqueux.

De manière également préférée, le polymère naturel modifié anionique a une masse moléculaire allant de 3 à 50 millions g/mol. De même, la masse moléculaire du polymère naturel modifié anionique peut aller de 5 à 30 millions g/mol.

Le degré de substitution correspond au nombre moyen de groupe hydroxyle substitué par unité monomérique (ose ou monosaccharide). Une technique d'analyse préférée selon l'invention pour déterminer le degré de substitution est la résonance magnétique nucléaire (RMN) 1H, 13C, 2D, ou par le dosage de l'anionicité ou de la cationicité apportée par la substitution par exemple par titration colloïdale.

De manière préférée, le polymère naturel modifié anionique a un degré de substitution compris entre 0,01 et 3, préférentiellement entre 0,1 et 2, plus préférentiellement entre 0,2 et 0,7.

De manière également préférée, le polymère naturel modifié anionique a une densité de charge comprise entre 0,1 et 15 meq/g, plus préférentiellement entre 0,2 et 10 meq/g.

La densité de charge anionique est calculée à partir du degré de substitution du polymère naturel modifié anionique.

La densité de charge est calculée selon la formule suivante :

$$\text{Densité de charge} = (\text{degré de substitution}/ \text{Masse molaire moyenne en nombre du monomère}) \times 1000$$

De manière préférée, pour le procédé de l'invention, le polymère naturel modifié anionique est une gomme de guar anionique.

De manière préférée, pour le procédé selon l'invention, le polymère naturel modifié cationique est ajouté en une quantité en masse allant de 50 à 1 000 ppm par rapport à la quantité de particules solides comprises dans l'effluent aqueux. D'un point de vue pratique, il est ajouté en une quantité allant de 50 à 1 000 g par tonne de particules solides comprises dans l'effluent aqueux.

De manière également préférée, le polymère naturel modifié cationique a une masse moléculaire allant de 100 000 à 50 millions g/mol. De même, la masse moléculaire du polymère naturel modifié cationique peut aller de 500 000 à 2 millions g/mol.

De manière préférée, le polymère naturel modifié cationique a un degré de substitution compris entre 0,1 et 3, préférentiellement entre 0,2 et 2,5 plus préférentiellement entre 0,3 et 2.

De manière également préférée, le polymère naturel modifié cationique a une densité de charge comprise entre 0,5 et 10 meq/g, plus préférentiellement entre 1 et 6 meq/g.

De manière préférée pour le procédé de l'invention, le polymère naturel modifié cationique est un amidon cationique ou un dextran cationique.

Plus préférentiellement pour le procédé de l'invention, le polymère naturel modifié cationique est un amidon cationique.

Ainsi, et de manière préférée, pour le procédé de l'invention, le polymère naturel modifié anionique est une gomme de guar anionique et le polymère naturel modifié cationique est un amidon cationique.

Selon un mode de réalisation de l'invention, le ratio massique entre le polymère naturel modifié anionique et le polymère naturel modifié cationique est compris entre 15:1 et 5:1.

Lors de leur addition dans l'effluent aqueux, le polymère naturel modifié cationique et le polymère naturel modifié anionique peuvent, indépendamment, être utilisés sous forme liquide, sous forme solide, sous forme d'une suspension, sous forme d'une poudre ou sous forme d'une dispersion dans de l'huile ou dans une saumure. Lorsque la forme solide est utilisée, la dissolution partielle ou totale dans l'eau de cette dernière peut se faire à l'aide d'une unité de préparation de polymère comme le Polymer Slicing Unit (Unité de tranchage de polymère - PSU) divulgué dans le document EP 2 203 245. De manière préférée, ils sont ajoutés sous la forme d'une solution aqueuse ou d'une dispersion aqueuse.

De manière avantageuse, le polymère naturel modifié anionique et le polymère naturel modifié cationique peuvent être ajoutés à l'effluent aqueux lors de son transport, notamment dans les conduites de transport de l'effluent vers des lieux de dépôt utilisés pour la déshydratation et la solidification du résidu de traitement.

Les lieux de dépôt peuvent être à l'air libre. Il peut s'agir de terrains non-délimités ou de zones fermées, par exemple un bassin ou une cellule. Les étapes de traitement selon le procédé de l'invention puis d'épandage de l'effluent traité peuvent être renouvelées en un même lieu conduisant alors à la superposition de couches de résidus traités. L'épandage peut également être réalisé de manière continue pour former un amas de résidu traité dont l'eau s'extrait.

L'utilisation d'unités de traitement mécanique peut être associée au procédé selon l'invention. De telles unités de traitement mécanique sont notamment des dispositifs de centrifugation, de pressage ou de filtration de l'effluent traité. On peut citer un épaississeur, une centrifugeuse ou un hydrocyclone.

Le polymère naturel modifié anionique et le polymère naturel modifié cationique peuvent indépendamment être ajoutés en plusieurs fois, notamment de manière alternée ou de manière séquencée. Préférentiellement, le polymère naturel modifié cationique est ajouté en une seule fois.

Le polymère naturel modifié anionique et le polymère naturel modifié cationique peuvent être ajoutés dans une conduite transportant l'effluent vers une unité de traitement mécanique ou dans l'effluent sortant d'une telle unité lors de son transport vers un lieu de dépôt ou vers une autre unité de traitement mécanique. Le polymère naturel modifié anionique et le polymère naturel modifié cationique peuvent être ajoutés dans une conduite transportant l'effluent vers une zone de dépôt.

Outre l'addition dans l'effluent d'au moins un polymère naturel modifié anionique, puis l'addition d'au moins un polymère naturel modifié cationique, le procédé selon l'invention peut également comprendre la séparation de toute ou partie de l'eau du mélange comprenant des particules solides, au moins un polymère naturel modifié anionique et au moins un polymère naturel modifié cationique.

De manière préférée au cours du procédé selon l'invention, la séparation de toute ou partie de l'eau est mise en œuvre à partir du mélange comprenant les particules solides traitées par au moins polymère naturel modifié anionique et par au moins un polymère naturel modifié cationique.

La séparation de l'eau peut, notamment, être réalisée par épandage, par centrifugation, par pressage ou par filtration. La séparation de l'eau est préférentiellement réalisée par épandage.

De manière particulièrement avantageuse, la séparation de l'eau permet d'éliminer au moins 20 % en masse de l'eau comprise dans l'effluent. De préférence, elle permet d'éliminer au moins 30 % en masse d'eau comprise dans l'effluent. De manière plus préférée, elle permet d'éliminer au moins 50 % en masse, voire au moins 60 % en masse, de l'eau comprise dans l'effluent. La quantité d'eau éliminée est mesurée 24 h après la mise en œuvre du procédé selon l'invention. Selon l'invention, la mesure de la quantité d'eau éliminée est effectuée par évaluation de la libération nette d'eau (NWR ou *net water release*) de l'effluent de départ, 24 h après traitement selon le procédé.

L'invention concerne également une composition comprenant un effluent aqueux comprenant des particules solides, au moins d'un polymère naturel modifié anionique choisi parmi les gommes de guars anioniques.

L'invention concerne également une composition comprenant un effluent aqueux comprenant des particules solides, au moins un polymère naturel modifié anionique choisi parmi les gommes de guars anioniques et au moins un polymère naturel modifié cationique choisi parmi les amidons cationiques ou les dextrans cationiques.

L'invention concerne également l'utilisation d'au moins un polymère naturel modifié anionique, de préférence polysaccharide naturel modifié anionique, choisi parmi les gommes de guar anioniques, puis d'au moins un polymère naturel modifié cationique, de préférence polysaccharide naturel modifié cationique, de préférence choisi parmi les amidons cationiques et/ou les dextrans cationiques pour traiter de manière successive les particules solides contenues dans un effluent aqueux.

### Exemples

**Exemple 1** : Traitement d'un échantillon de MFT (29,8 % en masse d'extrait sec) avec différents polymères anioniaues.

Pour chaque test, le volume approprié de solution de polymère anionique à 0,4 % en masse est ajouté dans 200 g de MFT puis le tout est mélangé manuellement jusqu'à ce qu'on observe une floculation et une libération d'eau optimum. Les dosages en polymères anioniques sont exprimés en g/Tonne sèche de MFT. Les résultats sont récapitulés dans le tableau 1 ci-dessous :

Tableau 1

| Polymère modifié anionique | Dosage en polymère modifié anionique | LNE 24h |
|---|---|---|
| Polyacrylamide anionique | 4000 | Floculation impossible |
| Biolam P - Hydroxypropyl quar | 4200 | 16,0 % |

(suite)

| Polymère modifié anionique | Dosage en polymère modifié anionique | LNE 24h |
|---|---|---|
| Gomme de guar anionique 1 | 4000 | 18,5 % |
| Gomme de guar anionique 2 | 3800 | 22,4 % |
| Kelco KELZAN AP - Gomme xanthane | Floculation impossible | |
| Flocon SG 2693 - Gomme xanthane | Floculation impossible | |
| Blanose 7H9 - Carboxyméthyle cellulose | Prise en masse, mais pas d'eau relarguée | |
| Blanose 9H4F - Carboxyméthyle cellulose | Floculation impossible | |
| Blanose 7H4X - Carboxyméthyle cellulose | Prise en masse, mais pas d'eau relarguée | |
| Blanose 7M65 - Carboxyméthyle cellulose | Prise en masse, mais pas d'eau relarguée | |
| Blanose 9M31 F - Carboxyméthyle cellulose | Floculation impossible | |
| HV150 - Alginate de sodium | Floculation impossible | |
| Tackidex C062 - Amidon anionique | Floculation impossible | |
| Naiaclear 900 AFAP - Amidon anionique | Floculation impossible | |
| EMES KM2NV - Amidon anionique | Floculation impossible | |
| VECTOR A180 - Amidon anionique | Floculation impossible | |
| LNE = Libération Nette de l'Eau. Elle correspond à la quantité totale d'eau récupérée pendant le test de floculation moins la quantité d'eau indûment ajoutée lors de l'incorporation de la solution aqueuse polymérique et de la solution de dispersant dans la suspension. | | |

Ces résultats montrent que seuls les dérivés de guar constituent des polymères biosourcés modifiés anioniques capables de floculer les MFT.

**Exemple 2** : Traitement d'un échantillon de MFT (29,8 % en masse d'extrait sec) avec un traitement dual 100% biosourcé : ajout d'un polymère naturel modifié anionique de gomme de guar 2, puis ajout d'un polymère naturel modifié cationique d'amidon 1 (densité de charge = 1,5 meq/g)

Pour chaque test, différents volumes de polymère naturel modifié anionique à 0,4 % en masse sont ajoutés dans 200 g de MFT. Le mélange est ensuite agité manuellement pendant 1 min. Puis, différents volumes de solution de polymère naturel modifié cationique à 0,4 % en masse sont ajoutés à leur tour et le tout est mélangé jusqu'à obtenir le meilleur résultat de LNE. Les dosages en polymères sont exprimés en g/Tonne sèche de MFT. Les résultats sont récapitulés dans le tableau 2 ci-dessous :

Tableau 2

| Dosage guar anionique 2 | Dosage amidon cationique 1 | LNE 24h |
|---|---|---|
| 4000 | 0 | 21,6 % |
| 4000 | 160 | 24,0 % |
| 4000 | 240 | 25,5 % |
| 4000 | 320 | 27,0 % |
| 4000 | 400 | 28,2 % |
| 4000 | 480 | 29,8 % |
| 4000 | 560 | 30,2 % |
| 3600 | 0 | 8,8 % |
| 3600 | 160 | 16,6 % |
| 3600 | 320 | 23,9 % |

(suite)

| Dosage guar anionique 2 | Dosage amidon cationique 1 | LNE 24h |
|---|---|---|
| 3600 | 480 | 24,4 % |

Ces résultats montrent qu'il est possible de traiter les MFT à l'aide d'un traitement duo 100 % biosourcé composé d'un polymère naturel modifié anionique tel que la gomme de guar anionique et d'un polymère naturel modifié cationique tel que l'amidon cationique.

**Exemple 3** : Traitement d'un échantillon de MFT (44,2 % en masse d'extrait sec) avec un traitement duo 100% biosourcé : ajout d'un polymère naturel modifié anionique de gomme de guar, puis ajout d'un polymère cationique.

Pour chaque test, différents volumes de solution de gomme de guar anionique 2 à 0,4 % en masse sont ajoutés dans 200 g de MFT. Le mélange est ensuite agité manuellement pendant 1 min. Puis, différents volumes de solution de polymère cationique à 0,4 % en masse sont ajoutés à leur tour et le mélange ainsi obtenu est mélangé jusqu'à obtenir le meilleur résultat de LNE. 3 différents polymères cationiques sont testés : un synthétique, le polyDADMAC (polydiallyldimethylammonium chloride) de faible masse molaire, et deux biosourcés, l'amidon cationique 1, (densité de charge= 1,5 meq/g) et un dextran cationique (densité de charge = 3 meq/g, poids moléculaire = 2,5 millions). Les dosages en polymères sont exprimés en g/Tonne sèche de MFT. Les résultats sont récapitulés dans le tableau 3 ci-dessous :

Tableau 3

| Dosage guar anionique 2 | Dosage polymère cationique | LNE 24h |
|---|---|---|
| 5430 | 0 | 0,9 % |
| 4980 | PolyDADMAC : 226 | 4,8 % |
| 4525 | PolyDADMAC : 452 | 11,8 % |
| 4525 | PolyDADMAC : 905 | 11,7 % |
| 5430 | Amidon cationique 1 : 226 | 3,0 % |
| 5430 | Amidon cationique 1 : 452 | 10,3 % |
| 4980 | Amidon cationique 1 : 905 | 15,0 % |
| 4980 | Dextran cationique : 226 | 4,5 % |
| 4980 | Dextran cationique : 452 | 11,0 % |
| 4525 | Dextran cationique : 905 | 17,3 % |

Ces résultats montrent qu'un traitement duo d'un polymère naturel modifié anionique tel que la gomme de guar anionique et d'un polymère naturel modifié cationique tel que l'amidon cationique ou un dextran cationique conduit à de meilleurs résultats comparé à un traitement utilisant un polymère synthétique cationique traditionnel. En effet pour le traitement duo biosourcé on observe une augmentation constante de la LNE avec l'augmentation du dosage en polymère naturel modifié cationique. En revanche lors de l'utilisation du polymère traditionnel nous observons un maximum limité pour la LNE.

**Revendications**

1. Procédé de traitement d'un effluent aqueux comprenant des particules solides, comprenant :

(a) l'addition dans l'effluent d'au moins un polymère naturel modifié anionique choisi parmi les gommes de guar anioniques puis
(b) l'addition d'au moins un polymère naturel modifié cationique choisi parmi les amidons cationiques ou les dextran cationiques,

dans lequel l'effluent est :

**EP 3 510 000 B1**

- un effluent d'extraction minière provenant des mines de charbon, des mines de diamant, des mines de phosphate, des mines de métal comme l'aluminium, le platine, le fer, l'or, le cuivre, argent ; ou
- un effluent d'extraction minière de sable bitumineux ou de sable pétrolifère ; ou
- un effluent comprenant de 5 à 70 % en masse, de préférence de 20 à 50 % en masse, plus préférentiellement de 30 à 40 % en masse, de particules solides ; ou
- un effluent comprenant du sable, de l'argile et de l'eau ; ou
- un effluent comprenant du sable, de l'argile, de l'eau et du bitume résiduel ; ou
- un effluent comprenant des résidus frais ; ou
- un effluent comprenant des résidus fins.

2. Procédé selon la revendication 1, dans laquelle l'effluent est :

- un effluent comprenant des résidus fins frais (RFF ou FFT pour fresh fine tailings) ; ou
- un effluent comprenant des résidus fins mûrs (RFM ou MFT pour mature fine tailings).

3. Procédé selon l'une quelconque des revendications précédentes pour lequel le polymère naturel modifié anionique est ajouté en quantité en masse allant de 10 à 10000ppm par rapport à la quantité de particules solides comprises dans l'effluent aqueux.

4. Procédé selon l'une quelconque des revendications précédentes pour lequel le polymère naturel modifié anionique a une masse moléculaire allant de 3 à 50millions g/mol, de préférence de 5 à 30 millions g/mol.

5. Procédé selon l'une quelconque des revendications précédentes pour lequel le polymère naturel modifié anionique a un degré de substitution compris entre 0,01 et 3, préférentiellement entre 0,1 et 2, plus préférentiellement entre 0,2 et 0,7.

6. Procédé selon l'une quelconque des revendications précédentes pour lequel le polymère naturel modifié anionique a une densité de charge comprise entre 0,1 et 15 meq/g, plus préférentiellement entre 0,2 et 10 meq/g.

7. Procédé selon l'une quelconque des revendications précédentes pour lequel le polymère naturel modifié cationique est un amidon cationique.

8. Procédé selon l'une quelconque des revendications précédentes pour lequel le polymère naturel modifié cationique est ajouté en quantité de masse allant de 50 à 1 000ppm par rapport à la quantité de particules solides comprises dans l'effluent aqueux.

9. Procédé selon l'une quelconque des revendications précédentes pour lequel le polymère naturel modifié cationique a une masse moléculaire allant de 100 000 à 50 millions g/mol, de préférence de 500 000 à 2 millions g/mol.

10. Procédé selon l'une quelconque des revendications précédentes pour lequel le polymère naturel modifié cationique a un degré de substitution compris entre 0, 1 et 3, préférentiellement entre 0,2 et 2, 5, plus préférentiellement entre 0,3 et 2.

11. Procédé selon l'une quelconque des revendications précédentes pour lequel le polymère naturel modifié cationique a une densité de charge comprise entre 0,5 et 10 meq/g, plus préférentiellement entre 1 et 6 meq/g.

12. Procédé selon l'une quelconque des revendications précédentes pour lequel le ratio massique entre le polymère naturel modifié anionique et le polymère naturel modifié cationique est compris entre 15 :1 et 5 :1.

13. Procédé selon l'une quelconque des revendications précédentes comprenant également la séparation de tout ou partie de l'eau du mélange de particules solides traitées par un polymère naturel modifié anionique et un polymère naturel modifié cationique.

14. Procédé selon la revendication 13 pour lequel au moins 20%, de préférence au moins 30%, plus préférentiellement au moins 50%, encore plus préférentiellement au moins 60%, en masse de l'eau est séparée.

15. Utilisation d'au moins un polymère naturel modifié anionique choisi parmi les gommes de guar anioniques, puis d'au moins un polysaccharide naturel modifié cationique choisi parmi les amidons cationiques et/ou les dextran

8

cationiques pour traiter de manière successive des particules solides contenues dans un effluent aqueux.

**16.** Composition comprenant un effluent aqueux comprenant des particules solides, au moins un polymère naturel modifié anionique choisi parmi les gommes de guars anioniques et au moins un polysaccharide naturel modifié cationique choisi parmi les amidons cationiques et/ou les dextrans cationiques, dans laquelle l'effluent est :

- un effluent d'extraction minière provenant des mines de charbon, des mines de diamant, des mines de phosphate, des mines de métal comme l'aluminium, le platine, le fer, l'or, le cuivre, argent ; ou
- un effluent d'extraction minière de sable bitumineux ou de sable pétrolifère ; ou
- un effluent comprenant de 5 à 70 % en masse, de préférence de 20 à 50 % en masse, plus préférentiellement de 30 à 40 % en masse, de particules solides ; ou
- un effluent comprenant du sable, de l'argile et de l'eau ; ou
- un effluent comprenant du sable, de l'argile, de l'eau et du bitume résiduel ; ou
- un effluent comprenant des résidus frais ; ou
- un effluent comprenant des résidus fins.

**Patentansprüche**

**1.** Verfahren zum Behandeln eines wässrigen Ausflusses, der Feststoffpartikel enthält, das Folgendes umfasst:

(a) Hinzufügen zu dem Ausfluss wenigstens eines anionischen modifizierten natürlichen Polymers, das aus den anionischen Guargummis gewählt ist, anschließend
(b) Hinzufügen wenigstens eines kationischen modifizierten natürlichen Polymers, das aus den kationischen Stärkemehlen und den kationischen Stärkegummis gewählt ist,

wobei der Ausfluss Folgendes ist:

- ein Minenextraktionsausfluss, der aus Kohlenminen, Diamantminen, Phosphatminen oder Metallminen etwa für Aluminium, Platin, Eisen, Gold, Kupfer oder Silber stammt; oder
- ein Minenextraktionsausfluss von bitumenhaltigem Sand oder ölhaltigem Sand; oder
- ein Ausfluss, der 5 bis 70 Massen-%, vorzugsweise 20 bis 50 Massen-%, stärker bevorzugt 30 bis 40 Massen-% Feststoffpartikel enthält; oder
- ein Ausfluss, der Sand, Ton und Wasser enthält; oder
- ein Ausfluss, der Sand, Ton, Wasser und restliches Bitumen enthält; oder
- ein Ausfluss, der frische Rückstände enthält; oder
- ein Ausfluss, der feine Rückstände enthält.

**2.** Verfahren nach Anspruch 1, wobei der Ausfluss Folgendes ist:

- ein Ausfluss, der frische feine Rückstände (RFF oder FFT für "Fresh Fine Tailings") enthält; oder
- ein Ausfluss, der reife feine Rückstände (RFM oder MFT für "Mature Fine Tailings") enthält.

**3.** Verfahren nach einem der vorhergehenden Ansprüche, wobei das anionische modifizierte natürliche Polymer in einem Massenanteil hinzugefügt wird, der im Bereich von 10 bis 10.000 ppm in Bezug auf den Anteil von Feststoffpartikeln, die in dem wässrigen Ausfluss enthalten sind, liegt.

**4.** Verfahren nach einem der vorhergehenden Ansprüche, wobei das anionische modifizierte natürliche Polymer eine molekulare Masse im Bereich von 3 bis 50 Millionen g/mol, vorzugsweise von 5 bis 30 Millionen g/mol hat.

**5.** Verfahren nach einem der vorhergehenden Ansprüche, wobei das anionische modifizierte natürliche Polymer einen Substitutionsgrad im Bereich von 0,01 bis 3, vorzugsweise von 0,1 bis 2 und stärker bevorzugt von 0,2 bis 0,7 hat.

**6.** Verfahren nach einem der vorhergehenden Ansprüche, wobei das anionische modifizierte natürliche Polymer eine Ladungsdichte im Bereich von 0,1 bis 15 meq/g, stärker bevorzugt von 0,2 bis 10 meq/g besitzt.

**7.** Verfahren nach einem der vorhergehenden Ansprüche, wobei das kationischen modifizierte natürliche Polymer ein kationisches Stärkemehl ist.

**8.** Verfahren nach einem der vorhergehenden Ansprüche, wobei das kationische modifizierte natürliche Polymer in einem Massenanteil im Bereich von 50 bis 1000 ppm in Bezug auf den Anteil von Feststoffpartikeln, die in dem wässrigen Ausfluss enthalten sind, liegt.

**9.** Verfahren nach einem der vorhergehenden Ansprüche, wobei das kationische modifizierte natürliche Polymer eine molekulare Masse im Bereich von 100.000 bis 50 Millionen g/mol, vorzugsweise von 500.000 bis 2 Millionen g/mol hat.

**10.** Verfahren nach einem der vorhergehenden Ansprüche, wobei das kationische modifizierte natürliche Polymer einen Substitutionsgrad im Bereich von 0,1 bis 3, vorzugsweise von 0,2 bis 2,5 und stärker bevorzugt von 0,3 bis 2 hat.

**11.** Verfahren nach einem der vorhergehenden Ansprüche, wobei das kationische modifizierte natürliche Polymer eine Ladungsdichte im Bereich von 0,5 bis 10 meq/g, stärker bevorzugt von 1 bis 6 meq/g besitzt.

**12.** Verfahren nach einem der vorhergehenden Ansprüche, wobei das Massenverhältnis zwischen dem anionischen modifizierten natürlichen Polymer und dem kationischen modifizierten natürlichen Polymer im Bereich von 15:1 bis 5:1 liegt.

**13.** Verfahren nach einem der vorhergehenden Ansprüche, das außerdem das Trennen des gesamten Wassers oder eines Teils des Wassers von dem Gemisch aus Feststoffpartikeln, die mit einem anionischen modifizierten natürlichen Polymer und mit einem kationischen modifizierten natürlichen Polymer behandelt sind, umfasst.

**14.** Verfahren nach Anspruch 13, wobei wenigstens 20 Massen-%, vorzugsweise wenigstens 30 Massen-%, stärker bevorzugt wenigstens 50 Massen-% und noch stärker bevorzugt wenigstens 60 Massen-% des Wassers abgetrennt werden.

**15.** Verwendung wenigstens eines anionischen modifizierten natürlichen Polymers, das aus den anionischen Guargummis gewählt ist, dann wenigstens eines kationischen modifizierten natürlichen Polysaccharids, das aus den kationischen Stärkemehlen und/oder kationischen Stärkegummis gewählt ist, um nacheinander Feststoffpartikel, die in einem wässrigen Ausfluss enthalten sind, zu behandeln.

**16.** Zusammensetzung, die einen wässrigen Ausfluss, der Feststoffpartikel enthält, wenigstens ein anionisches modifiziertes natürliches Polymer, das aus den anionischen Guargummis gewählt ist, und wenigstens ein kationisches modifiziertes natürliches Polysaccharid, das aus den kationischen Stärkemehlen und/oder den kationischen Stärkegummis gewählt ist, enthält, wobei der Ausfluss Folgendes ist:

- ein Minenextraktionsausfluss, der aus Kohlenminen, Diamantminen, Phosphatminen oder Metallminen etwa für Aluminium, Platin, Eisen, Gold, Kupfer oder Silber stammt; oder
- ein Minenextraktionsausfluss von bitumenhaltigem Sand oder ölhaltigem Sand; oder
- ein Ausfluss, der 5 bis 70 Massen-%, vorzugsweise 20 bis 50 Massen-%, stärker bevorzugt 30 bis 40 Massen-% Feststoffpartikel enthält; oder
- ein Ausfluss, der Sand, Ton und Wasser enthält; oder
- ein Ausfluss, der Sand, Ton, Wasser und restliches Bitumen enthält; oder
- ein Ausfluss, der frische Rückstände enthält; oder
- ein Ausfluss, der feine Rückstände enthält.

**Claims**

**1.** Process for treating an aqueous effluent comprising solid particles, comprising:

(a) adding at least one anionic modified natural polymer chosen aming anionic guar gum to the effluent, then
(b) adding at least one cationic modified natural polymer chosen among cationic starch or cationic dextran,

wherein the effluent is:

- effluent from the mining extraction of coal mines, diamond mines, phosphate mines, metal mines such as aluminium, platinum, iron, gold, copper, silver; or
- effluent from the mining extraction of bituminous sand or oil sand; or

- effluent comprising 5 to 70 % by weight, preferably 20 to 50 % by weight, more preferably 30 to 40 % by weight of solid particles; or
- effluent comprising sand, clay and water; or
- effluent comprising sand, clay, water and residual bitumen; or
- effluent comprising fresh tailings; or
- effluent comprising fine tailings.

2. The process according to claim 1, wherein the effluent is:

- effluent comprising fresh fine tailings (FFTs); or
- effluent comprising mature fine tailings (MFTs).

3. The process according to any of the preceding claims, wherein the anionic modified natural polymer is added in an amount by weight ranging from 10 to 10 000 ppm relative to the quantity of solid particles contained in the aqueous effluent.

4. The process according to any of the preceding claims, wherein the anionic modified natural polymer has a molecular weight ranging from 3 to 50 million g/mol, preferably 5 to 30 million g/mol.

5. The process according to any of the preceding claims, wherein the anionic modified natural polymer has a degree of substitution of between 0.01 and 3, preferably between 0.1 and 2, more preferably between 0.2 and 0.7.

6. The process according to any of the preceding claims, wherein the anionic modified natural polymer has a charge density of between 0.1 and 15 meq/g, more preferably between 0.2 and 10 meq/g.

7. The process according to any of the preceding claims, wherein the cationic modified natural polymer is a cationic starch.

8. The process according to any of the preceding claims, wherein the cationic modified natural polymer is added in an amount by weight ranging from 50 to 1 000 ppm relative to the quantity of solid particles contained in the aqueous effluent.

9. The process according to any of the preceding claims, wherein the cationic modified natural polymer has a molecular weight ranging from 100 000 to 50 million g/mol, preferably from 500 000 to 2 million g/mol.

10. The process according to any of the preceding claims, wherein the cationic modified natural polymer has a degree of substitution of between 0.1 and 3, preferably between 0.2 and 2.5, more preferably between 0.3 and 2.

11. The process according to any of the preceding claims, wherein the cationic modified natural polymer has a charge density of between 0.5 and 10 meq/g, more preferably between 1 and 6 meq/g.

12. The process according to any of the preceding claims, wherein the weight ratio between the anionic modified natural polymer and the cationic modified natural polymer is between 15:1 and 5:1.

13. The process according to any of the preceding claims, also comprising the separation of all or part of the water from the mixture of solid particles treated with an anionic modified natural polymer and a cationic modified natural polymer.

14. The process according to claim 13, wherein at least 20 %, preferably at least 30 %, more preferably at least 50 %, further preferably at least 60 % by weight of water is separated.

15. Use of at least one anionic modified natural polymer selected from among anionic guar gums, then of at least one cationic modified natural polysaccharide selected from among cationic starches and/or cationic dextrans for the successive treatment of solid particles contained in an aqueous effluent.

16. Composition comprising an aqueous effluent comprising solid particles, at least one anionic modified natural polymer selected from among anionic guar gum and at least one cationic modified natural polysaccharide selected from among cationic starches and/or cationic dextrans, wherein the effluent is :

- effluent from the mining extraction of coal mines, diamond mines, phosphate mines, metal mines such as aluminium, platinum, iron, gold, copper, silver; or
- effluent from the mining extraction of bituminous sand or oil sand; or
- effluent comprising 5 to 70 % by weight, preferably 20 to 50 % by weight, more preferably 30 to 40 % by weight of solid particles; or
- effluent comprising sand, clay and water; or
- effluent comprising sand, clay, water and residual bitumen; or
- effluent comprising fresh tailings; or
- effluent comprising fine tailings.

**EP 3 510 000 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011000854 A1
- GB 2082163 A
- US 2015315056 A
- US 5433865 A
- EP 2203245 A

**Littérature non-brevet citée dans la description**

- **LAN CUMPSTEY.** Chemical Modification of Polysaccharides. *ISRN Organic Chemistry,* vol. 2013